# EUROPEAN PATENT APPLICATION

(11) **EP 4 611 364 A1**
(43) Date of publication of application: **03.09.2025**
(21) Application number: 25160415.3
(22) Date of filing: 26.02.2025
(51) Int. Cl.: H04N 9/31

(54) **CONTROL METHOD, ELECTRONIC DEVICE, AND NON-TRANSITORY COMPUTER-READABLE STORAGE MEDIUM STORING PROGRAM**

(30) Priority: 29.02.2024 JP 2024029290
(71) Applicant: Seiko Epson Corporation, Tokyo 160-8801 (JP)
(72) Inventor: TAKEUCHI, Kota, Suwa-shi, 392-8502 (JP); YOKOYAMA, Issei, Suwa-shi, 392-8502 (JP); MATOBA, Yusaku, Nagano, 386-1214 (JP)
(74) Representative: Lewis Silkin LLP

(57) **Abstract**

An electronic device that communicates with a projector projecting a projection image onto a projection target includes a camera, a display, and a processing device. The processing device causes the processing device displays, on the display, at least one prompt image for prompting a user to acquire a plurality of the captured images of a first adjustment pattern by using the camera. The first adjustment pattern is a pattern projected from the projector and that is for adjusting an outer shape of the projection image toward the projection target.

## Description

The present application is based on, and claims priority from JP Application Serial Number 2024-029290, filed February 29, 2024, the disclosure of which is hereby incorporated by reference herein in its entirety.

### BACKGROUND

### 1. Technical Field

The disclosure relates to a control method, an electronic device, and a non-transitory computer-readable storage medium storing a program.

### 2. Related Art

As an example of an image display device, a projector that projects an image onto an object such as a projection screen and thus displays the image may be mentioned. Depending on a shape of the object or a positional relationship between the object and the image display device, a distortion such as a trapezoidal distortion may occur in the image displayed on the object by the image display device. Various techniques for correcting the distortion are proposed in the related art, and examples thereof include a technique disclosed in WO 2017/179111.

WO 2017/179111 discloses a disclosure of a display system including an image display device and a mobile terminal that communicates with the image display device. The image display device disclosed in WO 2017/179111 includes a measurement pattern generator, a projector, a first communicator, and a distortion corrector. The measurement pattern generator generates a plurality of measurement patterns. The projector projects the plurality of measurement patterns generated by the measurement pattern generator. The first communicator communicates with the mobile terminal and receives information related to distortion correction of an image from the mobile terminal. The distortion corrector corrects, based on the information related to the distortion correction of the image received from the mobile terminal, the distortion of the image projected by the projector.

The mobile terminal disclosed in WO 2017/179111 includes a camera, a controller, and a second communicator. The camera images the plurality of measurement patterns displayed by the image display device. The controller generates, based on the plurality of measurement patterns imaged by the camera, information related to the distortion correction of the image. The second communicator communicates with the first communicator, and transmits, to the image display device, the information related to the distortion correction of the image generated by the controller.

In the distortion correction using the measurement patterns, it is desirable to capture a plurality of images for one measurement pattern in order to improve correction accuracy, but it is difficult for a user to recognize this.

### SUMMARY

An aspect of a control method according to the disclosure is a control method for an electronic device that is configured to communicate with a projector. The electronic device comprises a display, and a camera configured to capture a projection image projected from the projector onto a projection target. The control method comprising: displaying, on the display, at least one prompt image for prompting a user to acquire a plurality of captured images of a first adjustment pattern by using the camera, the first adjustment pattern being a pattern projected from the projector and that is for adjusting an outer shape of the projection image.

An aspect of an electronic device according to the disclosure includes: a communicator configured to communicate with a projector; a camera configured to capture a projection image projected from the projector onto a projection target; a display; and one or more processors. The one or more processors is configured to cause the display to display at least one prompt image for prompting a user to acquire a plurality of captured images of a first adjustment pattern by using the camera, the first adjustment pattern being a pattern projected from the projector and that is for adjusting an outer shape of the projection image.

In an aspect of a non-transitory computer-readable storage medium storing a program according to the disclosure, the program causes a computer to: cause a display to display at least one prompt image for prompting a user to acquire a plurality of captured images of a first adjustment pattern by using a camera, the first adjustment pattern being a pattern projected from a projector and that is for adjusting an outer shape of a projection image projected from the projector.

### BRIEF DESCRIPTION OF THE DRAWINGS

FIG. 1 is a diagram showing a configuration example of a display system 1 including an electronic device 10 according to an embodiment of the disclosure.
FIG. 2 is a diagram showing an example of an adjustment pattern (first adjustment pattern) projected from a projector 20 onto a projection target SC.
FIG. 3 is a diagram showing a configuration example of the electronic device 10.
FIG. 4 is a diagram showing an example of a rectangular check screen G10.
FIG. 5 is a diagram showing an example of an adjustment method description screen G20.
FIG. 6 is a diagram showing an example of an imaging start screen G30.
FIG. 7 is a diagram showing an example of an under-processing screen G40.
FIG. 8 is a diagram showing another example of the under-processing screen G40.
FIG. 9 is a flowchart showing a flow of processing in a control method executed by a processing device 110 according to a program PR1.
FIG. 10 is a diagram showing an example of a second adjustment pattern projected from the projector 20 onto the projection target SC.
FIG. 11 is a diagram showing an example of an unevenness check screen G50.

### DESCRIPTION OF EMBODIMENTS

In the embodiment described below, various technically preferable limitations are given. However, the embodiment of the disclosure is not limited to the forms described below.

### 1. Embodiment

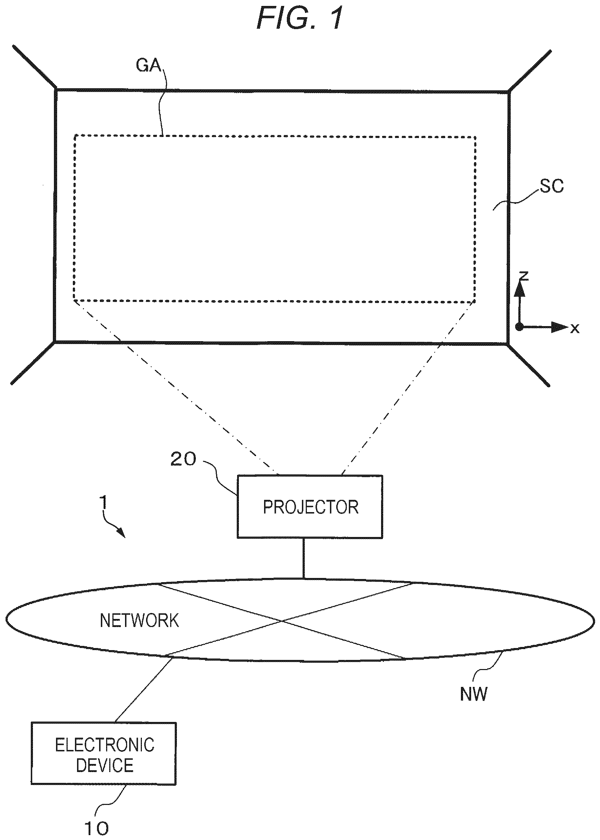

FIG. 1 is a diagram showing a configuration example of a display system 1 including an electronic device 10 according to an embodiment of the disclosure. The display system 1 includes, in addition to the electronic device 10, a projector 20 that communicates with the electronic device 10 via a network NW. As a specific example of the network NW, a wired or wireless local area network (LAN), a wired or wireless USB, or Bluetooth (registered trademark) may be employed.

The projector 20 projects a projection image GA onto a projection target SC. The projection target SC according to the embodiment is, for example, an inner wall of a room of a user of the display system 1. The projector 20 includes a generator (described later) such as a liquid crystal panel.

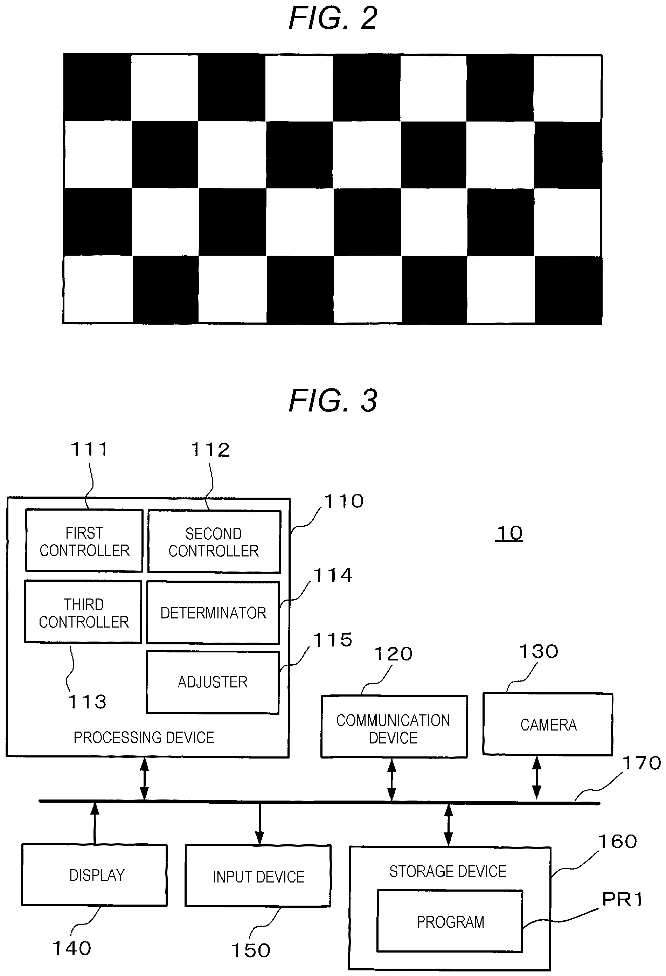

A wall surface of a room is not flat like a screen, and therefore the projection image GA displayed on the wall surface by the projector 20 may be distorted according to a dent or a bulge on the wall surface. When a projection lens of the projector 20 does not face the wall surface straight, the projection image GA displayed on the wall surface by the projector 20 is distorted. In the embodiment, the distortion of the image is corrected using an adjustment pattern as in the related art. Although details will be described later, in the embodiment, a dot pattern shown in FIG. 2 is used to adjust, to a rectangular shape, the outer shape of the projection image projected from the projector 20 onto the projection target SC. The dot pattern shown in FIG. 2 is an example of a first adjustment pattern according to the disclosure.

The electronic device 10 is, for example, a smartphone. FIG. 3 is a diagram showing a configuration example of the electronic device 10. As shown in FIG. 3, the electronic device 10 includes a processing device 110, a communication device (communicator) 120, a camera 130, a display 140, an input device 150, and a storage device 160. In the electronic device 10, each of the communication device 120, the camera 130, the display 140, the input device 150, and the storage device 160 is coupled to the processing device 110 via a bus 170.

The processing device 110 is one or more processors. The processing device 110 is, for example, a central processing unit (CPU). The processing device 110 operates according to a program PR1 stored in the storage device 160 to function as a control center of the electronic device 10.

The communication device 120 is a device that wirelessly communicates with another device and includes, for example, an interface circuit. A specific example of the another device that communicates with the communication device 120 is the projector 20.

The camera 130 is, for example, a video camera. The camera 130 includes an imaging lens (not shown) and an imaging element (not shown) that images a light from the imaging lens. The imaging element is, for example, a complementary metal-oxide-semiconductor (CMOS) sensor, and is not particularly limited. The camera 130 is a device for capturing a projection image projected from the projector 20 onto an object. The camera 130 captures an image in an imaging visual field as needed, and transfers image data representing the captured image to the processing device 110.

The display 140 includes, for example, a panel display such as a liquid crystal display, a plasma display, and an organic EL display, and a drive circuit thereof. The display 140 displays various images under the control of the processing device 110. The input device 150 is a transparent pressure sensor provided to cover a display region of the display 140. The input device 150 may include a plurality of handlers. The input device 150 receives an operation of a user and outputs operation content data indicating the received operation to the processing device 110. Accordingly, the operation of the user to the input device 150 is transmitted to the processing device 110.

The storage device 160 is a storage medium readable by the processing device 110. The storage device 160 includes, for example, a nonvolatile memory and a volatile memory. The nonvolatile memory is, for example, a read only memory (ROM), an erasable programmable read only memory (EPROM), or an electrically erasable programmable read only memory (EEPROM). The volatile memory is, for example, a random access memory (RAM). Various programs are stored in the nonvolatile memory. Examples of the various programs stored in the nonvolatile memory include a kernel program and the program PR1. In FIG. 3, illustration of the kernel program is omitted. The kernel program is a program for causing the processing device 110 to implement an operating system (OS). The processing device 110 reads the kernel program from the nonvolatile memory to the volatile memory at the opportunity when the electronic device 10 is turned on, and starts executing the read kernel program. When being instructed to start executing another program by an operation to the input device 150, the processing device 110 which operates according to the kernel program starts executing the another program.

For example, when being instructed to start executing a program PR1 by the operation to the input device 150, the processing device 110 reads the program PR1 from the nonvolatile memory to the volatile memory and starts executing the program PR1 read into the volatile memory. The processing device 110 operating according to the program PR1 functions as a first controller 111, a second controller 112, a third controller 113, a determinator 114, and an adjuster 115 shown in FIG. 3. That is, each of the first controller 111, the second controller 112, the third controller 113, the determinator 114, and the adjuster 115 shown in FIG. 3 is a software module implemented by operating the processing device 110 according to the program PR1. Roles of the first controller 111, the second controller 112, the third controller 113, the determinator 114, and the adjuster 115 shown in FIG. 3 are as follows. The processing device 110 includes one or a plurality of processors. The plurality of processors respectively correspond to, for example, the first controller 111, the second controller 112, the third controller 113, the determinator 114, and the adjuster 115.

The first controller 111 displays, on the display 140, an image of a UI screen for prompting the user to execute a control method of the disclosure. Specific examples of the UI screen displayed on the display 140 under the control of the first controller 111 include a rectangular check screen G10, an adjustment method description screen G20, an imaging start screen G30, and an under-processing screen G40 described below.

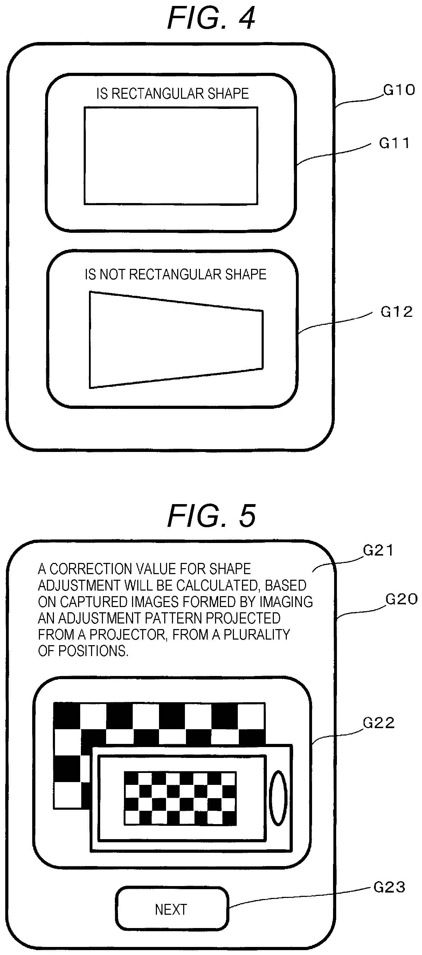

FIG. 4 is a diagram showing an example of the rectangular check screen G10. When an outer shape of a projection image projected onto the projection target SC by the projector 20 is not adjusted, the rectangular check screen G10 includes an image G12 representing an image of the projection image (for example, an image of a projection image having a trapezoidal outer shape), and an image G11 representing an image of a projection image having a rectangular outer shape. The image G12 is an example of a first image according to the disclosure. In a state where the rectangular check screen G10 is displayed on the display 140, the user can perform an operation of selecting the image G11 or the image G12 by an operation on the input device 150. That is, the image G11 and the image G12 are images selectable by the user, and the image G12 is an example of the first image according to the disclosure.

When the outer shape of the projection image projected onto the projection target SC by the projector 20 is a rectangular shape, the user selects the image G11. When the image G11 is selected, the electronic device 10 ends the control method according to the disclosure without calculating a geometric correction value for shape correction. On the other hand, when the outer shape of the projection image projected onto the projection target SC by the projector 20 is not a rectangular shape, the user selects the image G12. When the image G12 is selected, the first controller 111 displays an image of the adjustment method description screen G20 on the display 140.

FIG. 5 is a diagram showing an example of the adjustment method description screen G20. The adjustment method description screen G20 is an image showing a description related to the adjustment of the outer shape of the projection image. The image of the adjustment method description screen G20 according to the embodiment includes a character string image G21 representing an explanatory text related to the adjustment of the outer shape of the projection image, an image G22 schematically representing that an adjustment pattern is imaged using the electronic device 10, and a button image G23 for instructing the user to execute the adjustment. The adjustment method description screen G20 includes the character string image G21 representing the explanatory text related to the adjustment of the outer shape of the projection image and the image G22 schematically representing that the adjustment pattern is imaged using the electronic device 10, and thus the user can easily grasp the adjustment of the outer shape from a display content of the adjustment method description screen G20. The image of the adjustment method description screen G20 is an example of a third image according to the disclosure. In a state where the adjustment method description screen G20 is displayed on the display 140, the user can perform an operation of selecting the image G23 by an operation on the input device 150. When the image G23 is selected by the operation on the input device 150, the first controller 111 displays an image of the imaging start screen G30 on the display 140.

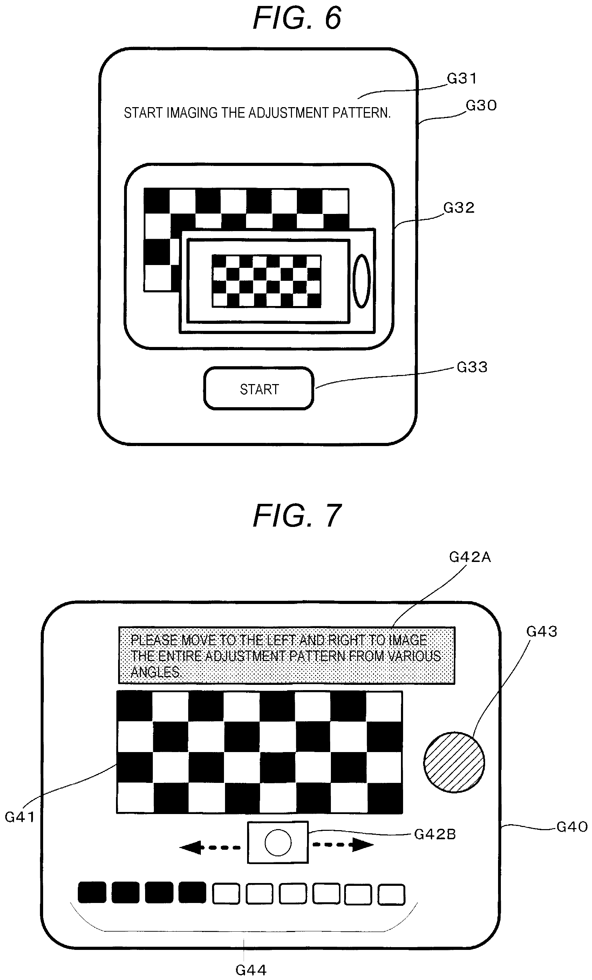

FIG. 6 is a diagram showing an example of the imaging start screen G30. The imaging start screen G30 includes a character string image G31 for notifying the user of the start of the imaging of the adjustment pattern, an image G32 schematically representing that the adjustment pattern is imaged using the electronic device 10 similarly to the image G22, and a button image G33 for instructing the user to start the projection and the imaging of the adjustment pattern for adjusting the outer shape. In a state where the imaging start screen G30 is displayed on the display 140, the user can perform an operation of selecting the image G33 by an operation on the input device 150. According to the embodiment, the user can project the adjustment pattern onto the projection target SC at a preferred timing by performing the operation of selecting the image G33 at a desired timing. When the image G33 is selected by the operation on the input device 150, the second controller 112, which will be described later, controls the projector 20 to project the adjustment pattern, and causes the camera 130 to image the adjustment pattern. The first controller 111 displays the under-processing screen G40 on the display 140.

FIG. 7 is a diagram showing an example of the under-processing screen G40. The under-processing screen G40 includes an image G41 including an adjustment pattern imaged by the camera 130, prompt images G42A and G42B for prompting the user to acquire a plurality of captured images, a button image G43 for instructing the user to acquire the captured images, and a gauge image G44. The prompt image G42A according to the embodiment is a character string image that prompts the user to "move to the left and right to image the entire adjustment pattern from various angles". In a state where the under-processing screen G40 is displayed, since the electronic device 10 is held in a horizontally long posture such that the entire adjustment pattern is included, an image of the under-processing screen G40 is also a horizontally long image. The prompt image G42B is an image of an icon of the camera that moves to swing left and right on a display surface of the display 140. That is, the prompt image G42B reciprocates on the under-processing screen G40. The reciprocating movement of the prompt image G42B continues until the number of captured images reaches a target number. The target number is set to a value such that the accuracy of the analysis result of the adjustment pattern is guaranteed, based on simulation, experiment, or the like performed in advance. In the embodiment, it is shown that the adjustment pattern is imaged from various angles by moving to the right and left by the swing of the prompt image G42B. When the electronic device 10 includes an acceleration sensor, the first controller 111 may specify a moving direction and a moving speed of the electronic device 10 by analyzing an output of the acceleration sensor, and swing the prompt image G42B in synchronization with the moving speed and the moving direction. The under-processing screen G40 may include at least one prompt image, and may not include the image G41 or the like.

The prompt image G42A and the prompt image G42B are images that prompt the user to acquire a first captured image at a first position and acquire a second captured image at a second position different from the first position. In the embodiment, the user can easily grasp that at least one captured image is to be acquired while checking the image G41, and can easily improve the adjustment accuracy of the outer shape. The prompt image G42B is an example of a fourth image according to the disclosure. The gauge image G44 represents the number of captured images acquired normally among the total number of images captured by the camera 130. That is, the gauge image G44 indicates the progress of the work of acquiring the normal captured image. In the embodiment, the gauge image G44 has, for example, 10 cells whose color can be changed from white to black. The number of cells is not particularly limited, but is preferably two or more. As the number of captured images normally acquired increases by one, the number of cells that change to black in FIG. 7 increases by one. The user can easily grasp the degree of progress related to the acquisition of the plurality of captured images through the change of the gauge image G44. The user can easily grasp that the plurality of captured images is to be acquired until the number of normal captured images reaches 10 by checking, through the change of the gauge image G44, whether a cumulative number of normal captured images is sufficient with respect to the number (10) of cells prepared in advance, that is, the total number (target number) of normal captured images to be acquired by the camera 130. Accordingly, the gauge image G44 can be said to be at least one prompt image. In the embodiment, the gauge image G44 has ten discrete cells, but the design of the gauge image G44 is not particularly limited as long as the user can grasp whether the cumulative number of normal captured images is sufficient. The gauge image G44 may be, for example, a continuous bar indicating a ratio of the number of normal captured images to the target number of normal captured images to be acquired by the camera 130.

For example, when only one captured image is acquired, the accuracy of the geometric correction of the projection image GA calculated by the processing device 110 based on the one captured image may be reduced. Specifically, when the processing device 110 calculates a projective transformation matrix for transforming from one of a coordinate system of the one captured image and a coordinate system of the projector 20 to the other, and performs homography decomposition processing on the projective transformation matrix, an incorrect normal vector of the projection target SC may be acquired. When the accuracy of the projective transformation matrix is reduced due to noise included in the captured image, a phenomenon may occur in which a geometric correction parameter calculated to be correct in the coordinate system of the camera 130 is not correct in the coordinate system of the projector 20. On the other hand, in the embodiment, the plurality of captured images are easily acquired by the prompt images G42A and G42B that prompt the acquisition of the plurality of captured images. Accordingly, when a correct normal vector of the projection target SC is acquired from a plurality of projective transformation matrices for transforming from one of the coordinate system of each of the plurality of captured images and the coordinate system of the projector 20 to the other, or even when noise is included in one captured image among the plurality of captured images, the influence of the noise can be compensated for by the other captured images, and as a result, it is possible to prevent a decrease in the accuracy of the geometric correction.

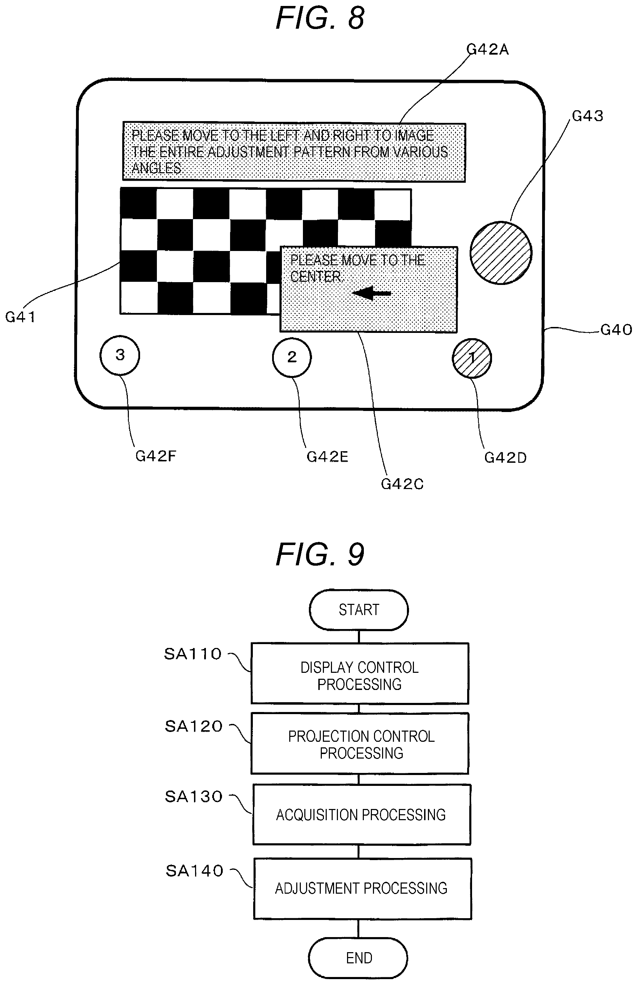

The prompt image according to the embodiment is a character string image for prompting the user to "move to the left and right to image the entire adjustment pattern from various angles" and an image of an icon of a camera moving to swing to the left and right on the display surface of the display 140, and the prompt image may be any one of these images. As shown in FIG. 8, instead of the prompt image G42B, an arrow image G42C indicating the moving direction to the user and check box images G42D, G42E, and G42F indicating the success or failure of the acquisition of the captured images at the right, center, and left positions may be used. The image G42C, the image G42D, the image G42E, and the image G42F are also examples of at least one prompt image.

For example, when the determinator 114, which will be described later, determines that the captured image at the right position is normally acquired, the first controller 111 displays the image G42D on the display 140 with hatching. On the other hand, when the determinator 114, which will be described later, determines that the captured image at the right position is not normally acquired, the first controller 111 displays the image G42D on the display 140 without hatching. That is, in the embodiment, when the determinator 114, which will be described later, determines that one of the first captured image and the second captured image is normally acquired, the first controller 111 displays the corresponding check box on the display 140 in a first display mode (display mode in which any of the check boxes is not hatched). On the other hand, when the determinator 114, which will be described later, determines that both the first captured image and the second captured image are normally acquired, the first controller 111 displays the corresponding check box on the display 140 in a second display mode (display mode in which all the check boxes are hatched). In the mode in which the under-processing screen G40 shown in FIG. 8 is displayed, the user can easily grasp whether the captured image is normally acquired by checking the change in the display mode of the prompt image.

The second controller 112 causes the projector 20 to project the above-described adjustment pattern by communicating with the projector 20 via the communication device 120.

The third controller 113 controls the camera 130 to capture an image including the adjustment pattern projected on the projection target SC.

The determinator 114 determines whether the image captured by the camera 130 is normally acquired according to an instruction of the user. More specifically, the determinator 114 attempts to detect the first adjustment pattern for the image captured by the camera 130, and determines that the captured image is normally acquired when the detection is successful. For example, the determinator 114 calculates a spectral distribution of the captured image by performing fast Fourier transform on the first adjustment pattern. Then, the determinator 114 calculates a magnitude of a high-frequency component based on a result obtained by analyzing the spectral distribution. The magnitude of the high-frequency component is an example of an index indicating sharpness of the captured image. As the blur of the captured image increases, the high-frequency component decreases. A frequency to be set as the high frequency among all frequencies is not particularly limited as long as it is necessary for the analysis of the first adjustment pattern. The determinator 114 determines that the captured image is normally acquired when a preset high-frequency component is equal to or greater than a threshold, and determines that the captured image is not normally acquired when the preset high-frequency component is less than the threshold. Although the determination according to the blur of the captured image is described above, the determination method is not particularly limited. The determinator 114 may determine whether the captured image is normally acquired based on a color distribution, a magnitude of distortion, or the like of the captured image. The determinator 114 accumulates the normally acquired captured image in the volatile memory of the storage device 160.

The adjuster 115 calculates a geometric correction value for the outer shape adjustment based on the plurality of captured images accumulated in the volatile memory, and transmits the geometric correction value to the projector 20 to cause the projector 20 to execute the outer shape adjustment. The adjuster 115 may select two captured images whose captured positions are most distant from each other among the plurality of captured images, calculate a geometric correction value based on the plurality of captured images as long as a distance between the captured positions is equal to or greater than a threshold, and prompt the user to continue capturing when the distance between the captured positions is less than the threshold. This is because the usage of images, which are captured from positions as distant from each other as possible, contributes to improvement in correction accuracy.

The processing device 110 operating according to the program PR1 executes the control method markedly indicating features of the disclosure. FIG. 9 is a flowchart showing a flow of processing in the control method. As shown in FIG. 9, the control method includes display control processing SA110, projection control processing SA120, acquisition processing SA130, and adjustment processing SA140.

In the display control processing SA110, the processing device 110 functions as the first controller. In the display control processing SA110, the processing device 110 first displays the above-described rectangular check screen G10 on the display 140. Then, when an operation of selecting the image G12 is received, the processing device 110 displays the adjustment method description screen G20 on the display 140. After displaying the adjustment method description screen G20 on the display 140, when an operation for the button image G23 is performed, the processing device 110 displays the imaging start screen G30 on the display 140 and waits for an operation for the button image G33. When the operation for the button image G33 is performed, the processing device 110 executes the projection control processing SA120.

In the projection control processing SA120, the processing device 110 functions as the second controller 112 and the third controller 113, causes the projector 20 to project the above-described adjustment pattern, and causes the camera 130 to image the adjustment pattern projected on the projection target SC. Note that, the projection control processing SA120 may be omitted from the flow of processing in the control method. In this case, the adjustment pattern is projected based on the user's operation to the projector 20 independent from the control by the electronic device 10.

In the acquisition processing SA130, the processing device 110 functions as the first controller 111 and the determinator 114. In the acquisition processing SA130, the processing device 110 first displays the under-processing screen G40 on the display 140. When an operation for the button image G43 is performed, an image captured by the camera 130 is acquired. Then, each time a captured image is acquired, the processing device 110 determines whether the captured image is normally acquired, and when it is determined that captured images from a plurality of positions are normally acquired, the processing device 110 executes the adjustment processing SA140 described later and ends the execution of the control method. On the other hand, when it is determined that the captured image is not normally acquired, the user is prompted to redo imaging. For example, in a mode in which the image shown in FIG. 8 is used as the under-processing screen G40, check boxes corresponding to the respective positions are displayed on the display 140 in the above-described first display mode to prompt the user to re-acquire the captured image.

In the adjustment processing SA140, the processing device 110 functions as the adjuster 115. In the adjustment processing SA140, the processing device 110 calculates, based on the plurality of captured images acquired in the acquisition processing SA130, a geometric correction value for correcting distortion of a projection image, and transmits the geometric correction value to the projector 20. Thereafter, the projector 20 performs geometric correction for correcting an outer shape of the projection image according to the geometric correction value received from the electronic device 10, and projects, onto the projection target SC, the projection image whose outer shape is adjusted.

As described above, according to the embodiment, the user can easily grasp from the prompt images G42A and G42B that the plurality of images captured from different positions are to be acquired while checking the image G41, and can easily improve the adjustment accuracy of the outer shape.

### 2. Modifications

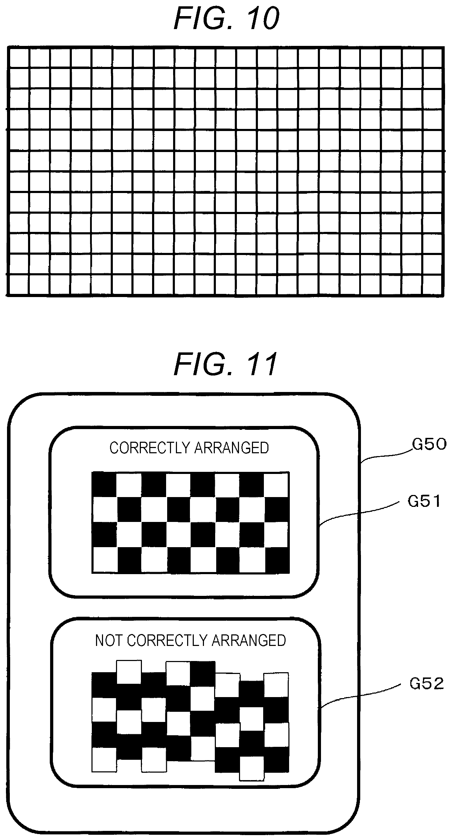

Each of the above embodiments may be modified as follows.
(1) After the adjustment method description screen G20 is displayed on the display 140, the first controller 111 may display, on the display 140, the fourth image that recommends a posture of the camera (in other words, a posture of the electronic device 10) when the first adjustment pattern is captured by the camera 130 prior to the display of the imaging start screen G30. According to this aspect, the user can easily grasp a posture in which the first adjustment pattern is to be imaged. The same effect can be obtained by the projector 20 projecting the fourth image instead of displaying the fourth image on the display 140.
(2) After the adjustment of the outer shape is executed, the second controller 112 may cause the projector 20 to project a second adjustment pattern in which a plurality of figures are arranged, in order to cause the user to determine whether adjustment for unevenness in a projection image is necessary. A specific example of the second adjustment pattern is a grid pattern shown in FIG. 10. This is because the user visually determines the presence or absence of unevenness in the projection image, but it is difficult to visually determine the presence or absence of unevenness when the projection image is a monochromatic image, a natural image, or the like. A grid interval of the grid pattern is preferably equal to or larger than a correction point interval of a correction circuit that executes geometric correction in the projector 20. This is because, by setting the grid interval of the grid pattern to be the same as or larger than the correction point interval of the correction circuit that executes the geometric correction in the projector 20, unnecessary correction does not need to be performed in the case of fine unevenness that cannot be corrected.
   In this case, the first controller 111 may display an unevenness check screen G50 shown in FIG. 11 on the display 140 in order to guide the user to adjust the unevenness in the projection image. As shown in FIG. 11, the unevenness check screen G50 includes an image G52 indicating a state where the arrangement of the plurality of figures is distorted and an image G51 indicating a state where the arrangement of the plurality of figures is not distorted. The image G52 indicates that unevenness occurs in the projection image. The image G52 is an example of a fifth image according to the disclosure, and the image G51 is an example of a sixth image according to the disclosure. The electronic device 10 displaying the unevenness check screen G50 on the display 140 receives an operation of selecting the image G51 or the image G52. When the operation of selecting the image G52 is received, the first controller 111 displays, on the display 140, a seventh image indicating a description related to the adjustment of the unevenness in the projection image. According to this aspect, by displaying the seventh image, it is possible to guide the user to further adjust the projection image.
(3) The first controller 111, the second controller 112, the third controller 113, the determinator 114, and the adjuster 115 in the above embodiment are all software modules. However, any one, any two, any three, any four, or all of the first controller 111, the second controller 112, the third controller 113, the determinator 114, and the adjuster 115 may be a hardware module such as an application specific integrated circuit (ASIC). The same effects as the embodiment described above can be achieved even when any one, any two, any three, any four, or all of the first controller 111, the second controller 112, the third controller 113, the determinator 114, and the adjuster 115 are hardware modules.
(4) The program PR1 may be manufactured alone and may be provided for payment or free of charge. Specific aspects at the time of providing the program PR1 include an aspect in which the program PR1 is written in a computer-readable storage medium such as a flash ROM and provided and an aspect in which the program PR1 is provided by being downloaded through an electric communication line such as the Internet. By causing a general computer to operate according to the program PR1 provided by these aspects, it is possible to cause the computer to execute the display method of the disclosure.

### 3. Summary of Disclosure

The disclosure is not limited to the embodiment and the modification described above and can be implemented in various aspects without departing from the gist of the disclosure. For example, the disclosure can also be implemented by the following aspects. In order to solve a part or all of the problems of the disclosure or to achieve a part or all of the effects of the disclosure, the technical features in the embodiment described above corresponding to the technical features in aspects described below can be replaced or combined as appropriate. The technical features can be deleted as appropriate unless the technical features are described as essential technical features in the present specification.

The disclosure will be summarized below in the form of appendixes.

### Appendix 1

A control method according to an aspect of the disclosure is a control method for an electronic device that is configured to communicate with a projector, the electronic device comprising a display, and a camera configured to capture a projection image projected from the projector onto a projection target, the control method comprising: displaying, on the display, at least one prompt image for prompting a user to acquire a plurality of captured images of a first adjustment pattern by using the camera, the first adjustment pattern being a pattern projected from the projector and that is for adjusting an outer shape of the projection image.

### Appendix 2

In the control method of a more preferable aspect according to (appendix 1), in the displaying the at least one prompt image on the display, a captured image of the first adjustment pattern is displayed together with the at least one prompt image. According to the control method of this aspect, the user can easily grasp that the plurality of captured images are to be acquired while checking an image captured by the camera, and can easily improve the adjustment accuracy of the outer shape.

### Appendix 3

In the control method of a more preferable aspect according to (appendix 1) or (appendix 2), the plurality of captured images include a first captured image and a second captured image different from the first captured image, the control method further includes determining whether each of the first captured image and the second captured image is normally acquired, and the displaying the at least one prompt image on the display includes displaying the at least one prompt image in a first display mode on the display when it is determined that one of the first captured image and the second captured image is normally acquired, and displaying the at least one prompt image in a second display mode when it is determined that both of the first captured image and the second captured image are normally acquired. According to the control method of this aspect, the user can easily grasp whether the captured image is normally acquired by checking a change in the display mode of at least one prompt image.

### Appendix 4

The control method of a further preferable aspect according to (appendix 3) further includes storing the captured image that is normally acquired among the plurality of captured images, in which the at least one prompt image includes a gauge image representing the number of normally acquired captured images. According to this aspect, the user can easily grasp the number of normally acquired captured images with respect to the total number of images captured by the camera.

### Appendix 5

In the control method of another preferable aspect according to any one of (appendix 1) to (appendix 4), the plurality of captured images include a first captured image and a second captured image different from the first captured image, and the at least one prompt image is an image for prompting the user to acquire the first captured image at a first position and to acquire the second captured image at a second position different from the first position. It is known that the adjustment accuracy of the outer shape is improved by using the images captured at different positions from each other instead of acquiring the plurality of captured images. According to this aspect, it is possible to guide the user to acquire the plurality of captured images for improving the adjustment accuracy of the outer shape by at least one prompt image.

### Appendix 6

In the control method of another preferable aspect according to any one of (appendix 1) to (appendix 5), the at least one prompt image includes an image indicating the electronic device, and a position of the image on the display moves. According to this aspect, according to the above configuration, the user can easily grasp that the plurality of captured images are to be acquired while moving the electronic device including the camera.

### Appendix 7

An electronic device according to an aspect of the disclosure includes: a communicator configured to communicate with a projector; a camera configured to capture a projection image projected from the projector onto a projection target; a display; and one or more processors, wherein the one or more processors is configured to cause the display to display at least one prompt image for prompting a user to acquire a plurality of captured images of a first adjustment pattern by using the camera, the first adjustment pattern being a pattern projected from the projector and that is for adjusting an outer shape of the projection image.

### Appendix 8

In a non-transitory computer-readable storage medium storing a program according to an aspect of the disclosure, the program causes a computer to: cause a display to display at least one prompt image for prompting a user to acquire a plurality of captured images of a first adjustment pattern by using a camera, the first adjustment pattern being a pattern projected from a projector and that is for adjusting an outer shape of a projection image projected from the projector.

## Claims

1. A control method for an electronic device that is configured to communicate with a projector, the electronic device comprising a display, and a camera configured to capture a projection image projected from the projector onto a projection target, the control method comprising:
displaying, on the display, at least one prompt image for prompting a user to acquire a plurality of captured images of a first adjustment pattern by using the camera, the first adjustment pattern being a pattern projected from the projector and that is for adjusting an outer shape of the projection image.

2. The control method according to claim 1, wherein
in the displaying the at least one prompt image on the display, a captured image of the first adjustment pattern is displayed together with the at least one prompt image.

3. The control method according to claim 1 or 2, wherein
the plurality of captured images include a first captured image and a second captured image different from the first captured image,
the control method further comprises determining whether each of the first captured image and the second captured image is normally acquired, and
the displaying the at least one prompt image on the display includes
displaying the at least one prompt image in a first display mode on the display when it is determined that one of the first captured image and the second captured image is normally acquired, and
displaying the at least one prompt image in a second display mode when it is determined that both of the first captured image and the second captured image are normally acquired.

4. The control method according to claim 3, further comprising:
storing the captured image, that is normally acquired, among the plurality of captured images, wherein
the at least one prompt image includes a gauge image representing the number of the captured images normally acquired.

5. The control method according to any one of claims 1 to 4, wherein
the plurality of captured images include a first captured image and a second captured image different from the first captured image, and
the at least one prompt image is an image for prompting the user to acquire the first captured image at a first position and to acquire the second captured image at a second position different from the first position.

6. The control method according to claim 5, wherein
the at least one prompt image includes an image indicating the electronic device, and a position of the image on the display moves.

7. An electronic device comprising:
a communicator configured to communicate with a projector;
a camera configured to capture a projection image projected from the projector onto a projection target;
a display; and
one or more processors, wherein
the one or more processors is configured to
cause the display to display at least one prompt image for prompting a user to acquire a plurality of captured images of the first adjustment pattern by using the camera, the first adjustment pattern being a pattern projected from the projector and that is for adjusting an outer shape of the projection image.

8. A non-transitory computer-readable storage medium storing a program, the program causing a computer to:
cause a display to display at least one prompt image for prompting a user to acquire a plurality of captured images of a first adjustment pattern by using a camera, the first adjustment pattern being a pattern projected from a projector and that is for adjusting an outer shape of a projection image projected from the projector.
